# EUROPEAN PATENT SPECIFICATION

(11) **EP 2 199 182 B1**
(45) Date of publication and mention of the grant of the patent: **14.11.2012**
(21) Application number: 09170047.6
(22) Date of filing: 11.09.2009
(51) Int. Cl.: B62D 1/16, F16B 21/18

(54) **Retaining device**
Haltevorrichtung
Dispositif de retenue

(30) Priority: 18.12.2008 GB 0823073
(43) Date of publication of application: 23.06.2010
(73) Proprietor: Nissan Motor Manufacturing (UK) Ltd., Cranfield Bedfordshire MK43 0DB (GB)
(72) Inventor: Colligan, Ian, Cranfield, Bedfordshire MK43 0DB (GB)

(56) References cited:
- FR-A1- 2 702 016
- JP-A- 56 163 962

## Description

This invention relates to automotive vehicle steering columns, and in particular, to a device for retaining a steering column shaft during assembly of the vehicles.

Vehicles are provided with a steering column to translate rotational input at the steering wheel into a directional orientation of the road wheels on the road. This is typically achieved by a steering box or a rack and pinion steering assembly. The steering box or pinion is controlled by the steering wheel via a steering column to change the direction of the wheels.

The steering column is usually formed from a series of shafts which are attached at a lower end to the pinion or steering box, and at an upper end to the steering wheel.

Most passenger vehicles have a monocoque construction with a structural vehicle body to which various vehicle components, such as the steering column and vehicle suspension are attached.

However, some vehicles, particularly trucks and sports utility vehicles, are manufactured not as a monocoque but as two sub assemblies, known as a body to frame vehicle. In a body to frame vehicle the powertrain, steering, suspension and vehicle body are mounted to the frame. The vehicle body or cab houses an occupant compartment where the driver and passengers are accommodated. Body to frame construction provides a robust platform which may be used to carry or tow heavy loads and is particularly suited to vehicles with a bias for off-road use.

In such a vehicle the steering column, usually comprising a lower shaft, an intermediate shaft and an upper shaft, passes from the frame through a bulkhead in the body, the bulkhead forming a barrier between the frame and the occupant compartment.

When assembling such a vehicle, it is usual for the lower shaft to be assembled onto the frame prior to fitting the body. The lower shaft is connected to the intermediate shaft when the vehicle body is assembled to the frame. The intermediate shaft is brought to the frame during the vehicle assembly process, when the frame and vehicle body are brought together. However, the intermediate shaft is not securely attached to the vehicle body until it is connected at its lower end to the lower shaft and at its upper end to the upper shaft. As a result it is necessary to retain the intermediate shaft on the body prior to making these connections. This is typically achieved using a retaining device which prevents the intermediate shaft falling from the body before attachment of either a universal joint, or attachment to the lower shaft or attachment to the upper shaft. Once the frame and body are assembled, the remaining steering shaft connection is made to connect the intermediate shaft to the lower shaft or the upper shaft to complete the assembly of the steering column.

Accordingly, a known solution is to use a retaining device which is clipped onto the end of the intermediate shaft in a sliding motion. This retaining device prevents the intermediate column from falling out of the vehicle body through the bulkhead. By virtue of its location on the end of the intermediate shaft, the retaining device then becomes permanently attached to the steering column following the connection of the intermediate shaft to the lower shaft. This makes removal of the retaining device impossible after completion of the vehicle assembly. As a result the retaining device becomes a redundant component on the assembled vehicle, adding to part count, cost and weight.

Furthermore, JP56163962 discloses a pin which clips around a steering shaft and pins it in place thereby acting as a jig for positioning the shaft within the steering jacket to facilitate assembling of the steering shaft.

It is an object of the present invention to at least mitigate some of the above problems.

According to one aspect of the present invention there is provided a retaining device for retaining a steering mechanism shaft, wherein the retaining device is adapted for radial removal from the shaft wherein the shaft comprises a substantially circular profile shaft having two opposing flat surfaces; characterised in that the retaining device comprises a hole and a slot leading from an external face of the device to the hole, the slot enabling the device to be radially fitted and removed from the shaft by having the slot dimensioned such that its width L₁ is marginally greater than the distance L₂ between the flat surfaces, where, in use, the retaining device is rotated to match the flat surfaces to move it to an unlocked position for fitting and removal, and rotated to move it to locked position to prevent removal, wherein the hole has a diameter smaller that the diameter of the shaft on which the retaining device is to be mounted such that, upon rotation the retaining device is deformed elastically outwards so as to grip the shaft.

By allowing for radial removal, the retaining device can be easily removed from the shaft even after the shaft has been fitted to the vehicle to form a steering column. This prevents the retaining device remaining on the finished vehicle as a redundant component. Furthermore, by allowing for the retaining device to be removed, the device can be reused many times leading to improved economy in the manufacture process.

In an embodiment, when the retaining device is in the locked position it is prevented from axial movement on the shaft.

Advantageously this allows the device to be attached to the shaft in such a way as to prevent the shaft from falling from the vehicle body.

In an embodiment, when the device is in the unlocked position it is capable of axial movement on the shaft, thereby enabling the device to be removed from the shaft.

In an embodiment, the slot is provided with a tapered lead-in from the external face of the device towards the hole.

This feature allows the retaining device to be easily mounted on the shaft by sliding it over the flats of the shaft and then rotating it around the shaft.

In an embodiment, the retaining device is substantially C-shaped.

In an embodiment, the retaining device is substantially U-shaped.

In an embodiment, the hole is circular and/or centrally positioned.

In an embodiment, the retaining device comprises an external surface having at least one feature thereon to facilitate simple handling and/or alignment of the device.

According to another aspect of the invention, there is provided a method of assembling a shaft (18) in a vehicle using the device described above comprising:
inserting a shaft (18) through an opening in a bulkhead (10) of a vehicle body;
placing a removable retaining device (22) on the shaft (18) so as to prevent said shaft (18) falling through the opening in the bulkhead (10) when released;
attaching at least one of: a joint (20) to an end of the shaft (18) within the vehicle body; a lower connection (8) to the end of the shaft (18) external the vehicle body; or an upper connection (9) to an end of the shaft (18) within the vehicle body; and
removing the retaining device (22) from the shaft (18).

The invention will now be described by way of example only with reference to the following drawings, in which:
Figure 1 is a partial side view of an assembled steering shaft;
Figure 2 is a partial side view of an intermediate shaft inserted through a bulkhead having an intermediate shaft retaining device according to the present invention;
Figure 3 is a perspective view of a shaft retainer in accordance with the present invention;
Figure 4 is a section view of the shaft retainer and intermediate shaft of Figure 2 taken along line III - III in Figure 2;
Figure 5 is a section view of the shaft retainer and intermediate shaft of Figure 4 with the shaft retainer partially removed from the intermediate shaft;
Figure 6 is a plan view of an alternative retainer in accordance with the present invention;
Figure 7 is a plan view of a further embodiment of a retainer in accordance with the present invention; and
Figure 8 is a flow chart depicting an assembly process of the present invention.

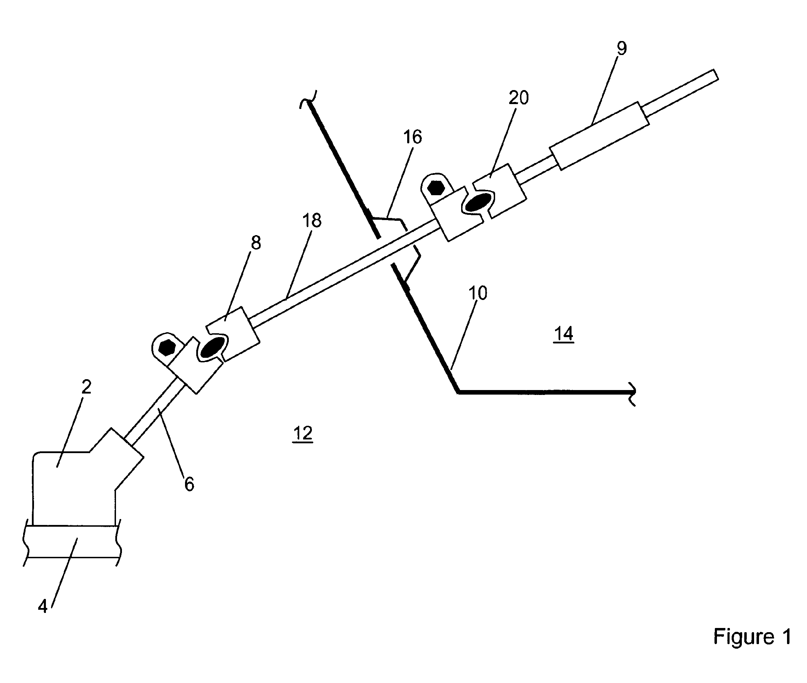

Referring to Figure 1, an assembled steering shaft is shown comprising a steering gear 2 mounted on a vehicle frame or chassis 4, a lower shaft 6, an intermediate shaft 18 connected at its lower end to the lower shaft 6 via a lower joint 8 and connected at its upper end to the upper shaft 9 by an upper joint 20. The upper joint 20 and lower joint 8 may take the form of universal joint or other suitable known joint. The intermediate shaft 18 passes through a bulkhead 10 partially enclosing an interior area 14 of a vehicle body. A seal 16 through which the intermediate shaft 18 passes, seals the cockpit module 14.

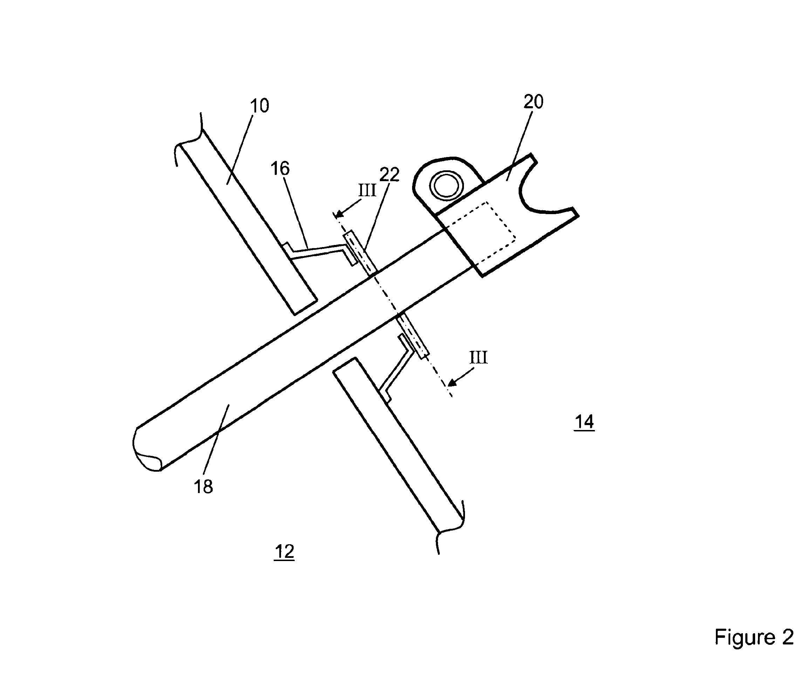

Referring to Figure 2, a partial side view through the bulkhead 10 of the vehicle body is shown. The bulkhead 10 forms part of the vehicle body which is attached to the frame to form the vehicle. The bulkhead separates the interior 14 of the vehicle body from the exterior 12 of the vehicle body. An intermediate shaft 18 passes through the bulkhead 10 and is sealed by seal 16 which is attached to the bulkhead 10. The end of the intermediate shaft 18 in the interior 14 of the vehicle body carries the upper joint 20 (shown in part) which attaches to the upper shaft (which is not shown for clarity), and ultimately to the steering wheel. The lower shaft (not shown) is located in the exterior 12 of the vehicle body. The lower shaft carries a similar joint (not shown) by which, when fully assembled, the intermediate shaft is joined to the lower shaft and ultimately the steering gear.

A retaining device 22 is provided to retain the intermediate shaft 18, prior to the intermediate shaft 18 being connected to one of the upper or lower shafts. These connections are necessary to hold the intermediate shaft 18 in place once the steering column is assembled. Use of the retaining device 22 prevents the shaft 18 from falling through the bulkhead 10 prior to the connections being made.

It will be appreciated by one skilled in the art that the retaining device 22 of the present invention is not limited to securing an intermediate shaft, but may equally be used to temporarily secure any shaft that protrudes from a body during assembly as required.

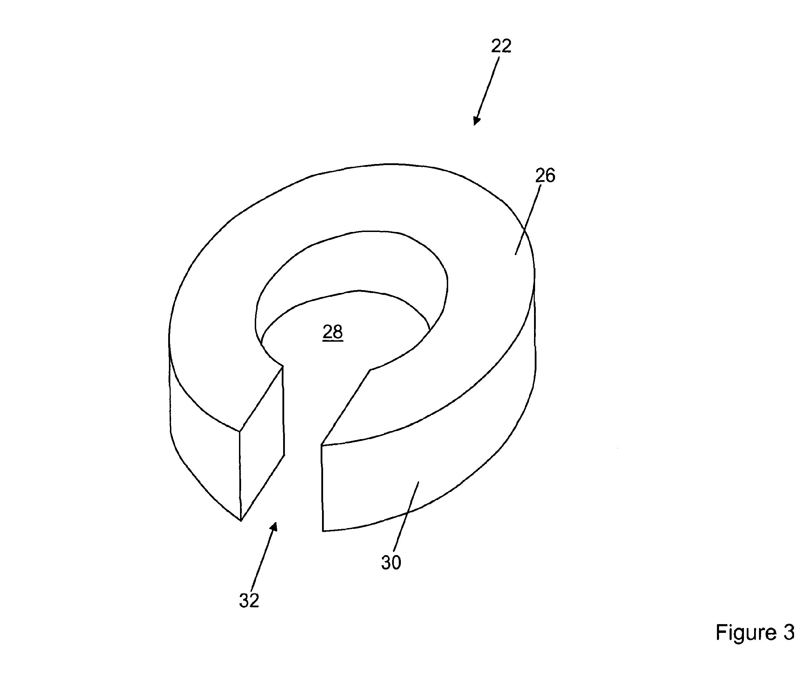

Figure 3 shows the intermediate shaft retaining device 22 in greater detail. The retaining device 22 comprises a substantially disc shaped element 26 having a substantially circular hole 28 therethrough for co-operating with the steering shaft. Leading from the hole 28 to the exterior surface 30 of the device 22 is a passage in the form of slot 32 through which the intermediate shaft can pass to apply the retaining device to the intermediate shaft and remove it therefrom.

The device is made of a durable material, for example a polyurethane polymer, although it could of course be made of any suitable material without departure from the invention. In this way the retaining device 22 defines jaws which surround the hole 28 and slot 32 to allow the device to grip or clamp the intermediate shaft 18 as will be described in further detail shortly.

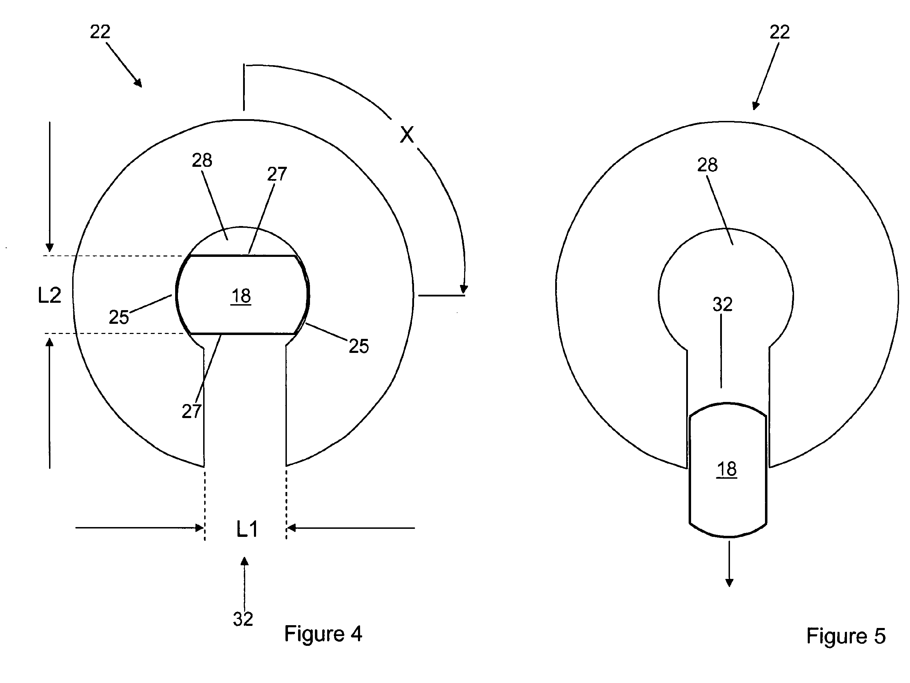

Referring to Figure 4, the retaining device 22 is shown in further detail and attached to the intermediate shaft 18. The diameter of the hole 28 is marginally smaller than the diameter of the shaft 18, the cross section of which comprises opposing circular sections 25 having opposing flats 27 therebetween. To apply the retaining device 22 to the shaft 18 the user aligns the slot 32 between the opposing jaws with the corresponding flats 27 on the shaft 18 and then slides the retaining device 22 onto the shaft 18. The user locks or clamps the retaining device 22 onto the shaft by rotating the retaining device 22 through an angle X relative to the shaft 18.

When the retaining device 22 is locked to the shaft 18 it is deformed elastically outward to accept the shaft 18 within the hole 28, the elastic deformation acting to clamp the retainer 22 onto the shaft 18. To remove the retaining device 22, it is rotated back through angle X, which is approximately 90 degrees, this re-aligns the flats 27 of the intermediate shaft 18 with the slot 32 as shown in Figure 5. The slot 32 is dimensioned such that its width L₁ is marginally greater than the distance between the flats of the shaft L₂, thereby allowing the retainer to be slid off the steering shaft 18.

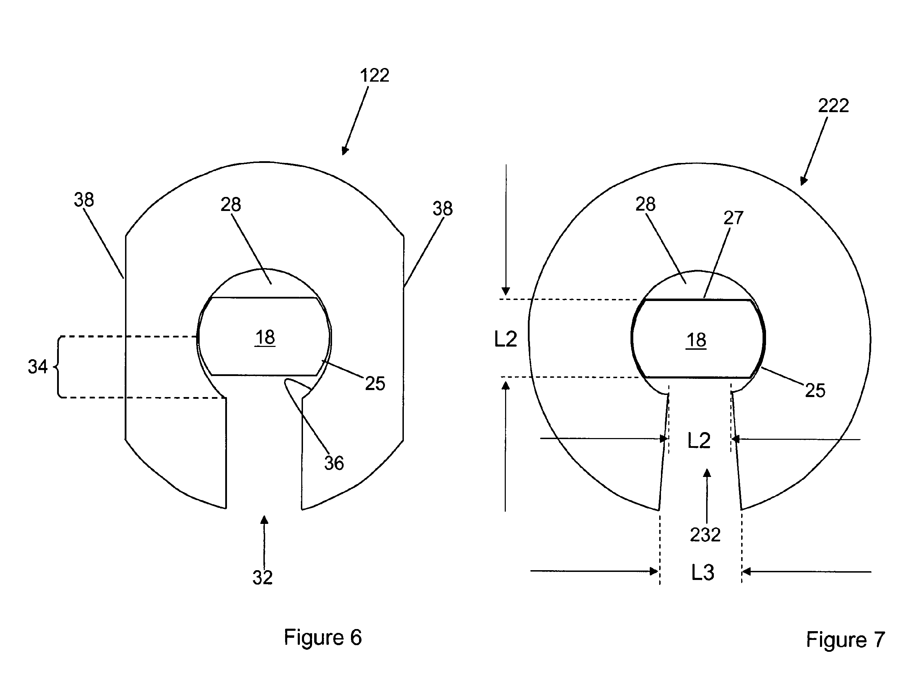

Referring to Figure 6, a plan view of an alternative 122 arrangement of the retainer is shown. In this arrangement the hole 28 is smaller in diameter than the shaft on which it is to be retained. Instead of being completely circular, as shown in Figures 2 to 4, the hole 28 has a modified section 34 adjacent the slot 32. The modified section 34 has curved leads 36 into the hole 28 enabling the shaft to rotate more easily within the alternative retainer 122. This creates a cam like surface within the hole. The curved leads 36 could of course be standard chamfers or any known alternative to facilitate the rotary lead of the shaft 18 into the hole. Apart from the differences in the shape of the hole 28 the alternative retainer 122 operates and functions identically to the retainer 22. The alternative retainer 122 has exterior flats 38 on its exterior surface to facilitate its handling, and its rotation by an operator. The exterior flats 38 are parallel the passage 32 such that alignment of the retaining device 122 with the shaft 18, is thereby facilitated. Such flats are of course equally applicable to the circular bored retainer 22.

Figure 7 shows an alternative embodiment of a retainer 222 of the present invention. In this embodiment a slot 232 has a tapered lead-in towards the hole 28 to facilitate easy application of the retainer 222 to the shaft 18. To apply the retainer 222 to the shaft 18, the operator aligns the slot 232 with the flats 27 on the shaft 18 and slides the retainer 222 over the flats 27 onto the shaft 18. In this embodiment, the entrance of the slot 232 at the outer surface of the retainer 222 has a larger dimension L3 than the dimension L2, which is the dimension between the flats 27 on the shaft 18. The slot 232 tapers from a larger dimension L3 at the outer surface to a smaller dimension L2 adjacent to the hole 28. The resulting hole 28 has the maximum possible contact area with which to grip the shaft 18, whilst being easier for the operator to apply to the shaft 18. Apart from the differences in the shape of the slot 232 the alternative retainer 222 operates and functions identically to the retainer 22.

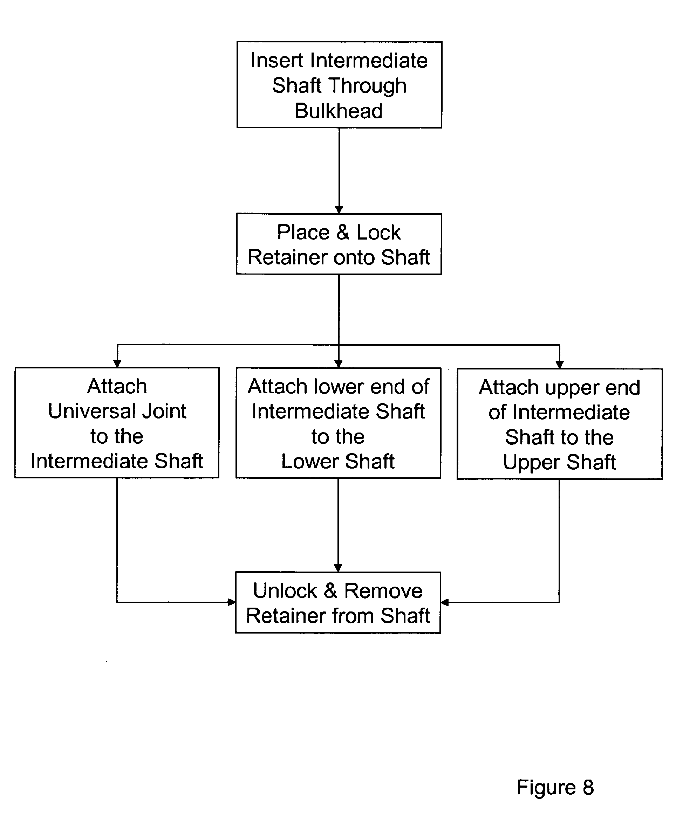

Referring to Figure 8, a flow chart of the assembly process is shown. The intermediate shaft 18 is inserted through an opening in a bulkhead 10 of the vehicle body separating the interior 14 of the vehicle body from the exterior 12 of the vehicle body. A removable steering shaft retaining device 22, 24 is then placed on the shaft 18 so as to prevent it falling through the bulkhead 10 when released. A joint 20 is then attached to the end of the intermediate shaft 18 in the interior 14 of the vehicle body after which the retainer 24 is removed from the shaft 18.

This method of manufacture enables the bulkhead 10, with the retained intermediate shaft 18 to be easily moved from one assembly station to the next prior to the joint 20 being attached to the end of the intermediate shaft 18. Once the joint 20 has been attached to the intermediate shaft 18, usually in a separate stage of manufacture, the retainer 22, 24 can be removed from the shaft 18 as described by example above, and reused.

## Claims

1. A retaining device (22) for retaining a steering mechanism shaft (18), wherein the retaining device (22) is adapted for radial removal from the shaft (18) wherein the shaft (18) comprises a substantially circular profile shaft having two opposing flat surfaces (27);
**characterised in that**:
the retaining device (22) comprises a hole (28) and a slot (32) leading from an external face (30) of the device (22) to the hole (28), the slot (32) enabling the device (22) to be radially fitted and removed from the shaft (18) by having the slot (32) dimensioned such that its width L₁ is marginally greater than the distance L₂ between the flat surfaces (27), where, in use, the retaining device (22) is rotated to match the flat surfaces (27) to move it to an unlocked position for fitting and removal, and rotated to move it to locked position to prevent removal, wherein the hole (28) has a diameter smaller that the diameter of the shaft (18) on which the retaining device (22) is to be mounted such that, upon rotation the retaining device (22) is deformed elastically outwards so as to grip the shaft (18).

2. A retaining device (22) according to claim 1 wherein, in the locked position the retaining device (22) is prevented from axial movement on the shaft (18).

3. A retaining device (22) according to claim 1 or claim 2 wherein, in said unlocked position the retaining device (22) is capable of axial movement on the shaft (18).

4. A retaining device (22) according to any preceding claim wherein a tapered lead-in is provided from the slot (232) towards the hole (28).

5. A retaining device (22) according to any previous claim wherein the retaining device (22) retainer is substantially C-shaped.

6. A retaining device (22) according to any preceding claim comprising an external surface (30) having features thereon to facilitate simple handling and/or alignment of the device (22).

7. A method of assembling a shaft (18) in a vehicle using the device of any of the preceding comprising:
inserting a shaft (18) through an opening in a bulkhead (10) of a vehicle body;
placing a removable retaining device (22) on the shaft (18) so as to prevent said shaft (18) falling through the opening in the bulkhead (10) when released;
attaching at least one of: a joint (20) to an end of the shaft (18) within the vehicle body; a lower connection (8) to the end of the shaft (18) external the vehicle body; or an upper connection (9) to an end of the shaft (18) within the vehicle body; and
removing the retaining device (22) from the shaft (18).

## Patentansprüche

1. Haltevorrichtung (22) zum Halten einer Lenkmechanismuswelle (18), wobei die Haltevorrichtung (22) zum radialen Abnehmen von der Welle (18) angepasst ist, wobei die Welle (18) ein im Wesentlichen kreisförmiges Profil mit zwei gegenüberliegenden ebenen Flächen (27) umfasst;
**dadurch gekennzeichnet, dass**:
die Haltevorrichtung (22) ein Loch (28) und einen von einer äußeren Oberfläche (30) der Vorrichtung zu dem Loch (28) führenden Schlitz (32) umfasst, wobei der Schlitz (32) ermöglicht, dass die Vorrichtung (22) radial an der Welle (18) angebracht und abgenommen werden kann, indem der Schlitz (32) derartig bemessen ist, dass seine Breite L₁ geringfügig größer ist als der Abstand L₂ zwischen den ebenen Flächen (27), wobei in Gebrauch die Haltevorrichtung (22) dazu gedreht wird, den ebenen Flächen (27) zu entsprechen, um sie in eine entsperrte Stellung zum Anbringen und Abnehmen zu bewegen und dazu gedreht wird, sie in eine gesperrte Stellung zum Verhindern des Abnehmens zu bewegen, wobei das Loch (28) einen Durchmesser aufweist, der kleiner ist als der Durchmesser der Welle (18), auf der die Haltevorrichtung (22) angebracht werden soll, so dass die Haltervorrichtung (22), wenn sie gedreht wird, elastisch nach außen verformt wird, um die Welle (18) zu greifen.

2. Haltevorrichtung (22) nach Anspruch 1, wobei in der gesperrten Stellung die Haltevorrichtung (22) an axialer Bewegung auf der Welle (18) gehindert wird.

3. Haltevorrichtung (22) nach Anspruch 1 oder Anspruch 2, wobei in der genannten entsperrten Stellung die Haltevorrichtung (22) zu axialer Bewegung auf der Welle (18) fähig ist.

4. Haltevorrichtung (22) nach einem der vorangehenden Ansprüche, wobei eine verjüngte Einführung von dem Schlitz (232) zu dem Loch (28) vorgesehen ist.

5. Haltevorrichtung (22) nach einem der vorangehenden Ansprüche, wobei der Halter der Haltervorrichtung (22) im Wesentlichen C-förmig ist.

6. Haltevorrichtung (22) nach einem der vorangehenden Ansprüche, umfassend eine äußere Oberfläche (30) mit Merkmalen darauf zum Ermöglichen der einfachen Handhabung und/oder Ausrichtung der Vorrichtung (22).

7. Verfahren zum Montieren einer Welle (18) in einem Fahrzeug unter Verwendung der Vorrichtung nach einem der Vorangehenden, umfassend:
Einführen einer Welle (18) durch eine Öffnung in einer Trennwand (10) einer Fahrzeugkarosserie;
Platzieren einer abnehmbaren Haltevorrichtung (22) auf die Welle (18), um zu verhindern, dass die genannte Welle (18) durch die Öffnung in der Trennwand (10) fällt, wenn sie freigegeben wird;
Anbringen von mindestens einem der Folgenden: ein Gelenk (20) an einem Ende der Welle (18) innerhalb von der Fahrzeugkarosserie; einen unteren Anschluss (8) an das Ende der Welle (18) außerhalb von der Fahrzeugkarosserie; oder einen oberen Anschluss (9) an ein Ende der Welle (18) innerhalb der Fahrzeugkarosserie; und
Abnehmen der Haltevorrichtung (22) von der Welle (18).

## Revendications

1. Dispositif de retenue (22) pour retenir un arbre de mécanisme de direction (18), le dispositif de retenue (22) étant adapté pour être déposé radialement de l'arbre (18), l'arbre (18) comprenant un arbre au profil sensiblement circulaire à deux surfaces plates opposées (27) ;
**caractérisé en ce que** :
le dispositif de retenue (22) comprend un orifice (28) et une fente (32) allant d'une face externe (30) du dispositif (22) jusqu'à l'orifice (28), la fente (32) permettant au dispositif (22) d'être posé et déposé radialement de l'arbre (18) en dimensionnant la fente (32) de telle sorte que sa largeur L₁ soit marginalement supérieure à la distance L₂ entre les surfaces plates (27), où, en service, le dispositif de retenue (22) est tourné pour coïncider avec les surfaces plates (27) afin de le déplacer jusqu'à une position déverrouillée pour la pose et la dépose, et tourné afin de le déplacer jusqu'à une position verrouillée qui empêche sa dépose, l'orifice (28) ayant un diamètre inférieur au diamètre de l'arbre (18) sur lequel le dispositif de retenue (22) doit être monté de telle sorte que, à la rotation le dispositif de retenue (22) soit déformé élastiquement vers l'extérieur de manière à agripper l'arbre (18).

2. Dispositif de retenue (22) selon la revendication 1, le dispositif de retenue (22), en position verrouillée, ne pouvant pas se déplacer axialement sur l'arbre (18).

3. Dispositif de retenue (22) selon la revendication 1 ou la revendication 2, le dispositif de retenue (22), dans la position déverrouillée, pouvant se déplacer axialement sur l'arbre (18).

4. Dispositif de retenue (22) selon l'une quelconque des revendications précédentes, dans lequel une entrée d'engagement conique est fournie depuis la fente (232) vers l'orifice (28).

5. Dispositif de retenue (22) selon l'une quelconque des revendications précédentes, dans lequel la retenue de dispositif de retenue (22) est sensiblement en forme de C.

6. Dispositif de retenue (22) selon l'une quelconque des revendications précédentes, comprenant une surface externe (30) présentant des motifs qui facilitent une manipulation et/ou un alignement simple du dispositif (22).

7. Procédé d'assemblage d'un arbre (18) dans un véhicule au moyen du dispositif selon l'une quelconque des revendications précédentes comprenant :
l'insertion d'un arbre (18) à travers une ouverture dans une cloison (10) d'une carrosserie ;
le placement d'un dispositif de retenue amovible (22) sur l'arbre (18) de manière à empêcher ledit arbre (18) de chuter à travers l'ouverture dans la cloison (10) lorsqu'il est libéré ;
la fixation d'au moins l'une : d'une articulation (20) à une extrémité de l'arbre (18) dans la carrosserie ; d'une connexion inférieure (8) à l'extrémité de l'arbre (18) à l'extérieur de la carrosserie ; ou d'une connexion supérieure (9) à une extrémité de l'arbre (18) à l'intérieur de la carrosserie ; et
la dépose du dispositif de retenue (22) de l'arbre (18).
